# EUROPEAN PATENT SPECIFICATION

(11) **EP 2 931 628 B1**
(45) Date of publication and mention of the grant of the patent: **25.03.2020**
(21) Application number: 13806051.2
(22) Date of filing: 13.12.2013
(51) Int. Cl.: B65D 85/72, C12C 13/10, B65D 51/16, C12G 1/036, C12G 1/02

(54) **FERMENTATION ENCLOSURE**
FERMENTATIONSGEHÄUSE
ENCEINTE DE FERMENTATION

(30) Priority: 13.12.2012 GB 201222497
(43) Date of publication of application: 21.10.2015
(73) Proprietor: Walker, Ian, Nottingham NG2 7TP (GB); Constable-Maxwell, Robert, Leicestershire LE17 6LZ (GB)
(72) Inventor: Walker, Ian, Nottingham NG2 7TP (GB); Constable-Maxwell, Robert, Leicestershire LE17 6LZ (GB)
(74) Representative: Adamson Jones
(86) International application number: PCT/GB2013/053293
(87) International publication number: WO 2014/091245

(56) References cited:
- EP-A2- 0 071 365
- EP-A2- 0 678 574
- WO-A1-88/05815
- WO-A1-96/40570
- CA-A1- 2 133 721
- CA-C- 1 302 326
- GB-A- 2 483 286
- US-A- 3 557 989
- US-A- 5 730 306

## Description

This invention concerns fermentation enclosures and, more particularly, although not exclusively, flexible fermentation enclosures as may be used for making alcoholic beverages.

The desire to make alcoholic beverages in relatively small volumes or batches, for example in a domestic environment, is well known and allows individuals to produce a variety of drinks to their taste instead of buying mass-produced alternatives. For many, so-called 'home brewing' represents a keen hobby.

Re-usable equipment for making beverages by fermentation requires careful sterilisation in order to ensure that unwanted microorganisms do not proliferate during the fermentation process. Such microorganisms can spoil the resulting beverage and can cause potential health risks, for example by way of bacterial infections of the stomach or bowel when spoiled beverages are consumed. Accordingly there is a significant margin for error using conventional equipment, which can deter people from home brewing or wine-making.

This problem has been previously addressed and there has been proposed a number of products with the aim of simplifying the process of home brewing for the end user. So-called 'brew bags' provide an enclosure which can be sealed and maintained in a sterile condition during distribution to the end user so as to significantly reduce the likelihood of detrimental bacterial growth during the fermentation process.

Examples of such bags are shown in CA2133721, GB2483286, EP0678574, WO88/05815, CA1302326, EP0071365, US3557989, US5730306, WO96/40570.

It is a known problem that the fermentation process causes significant volumes of gas, i.e. carbon dioxide, to be produced. Accordingly, if a brew bag is left in a sealed condition during fermentation, the pressure within the bag increases and can cause degradation of the quality of the resulting beverage or rupture of the bag. Thus there is a need to check the pressure and release gas from the bag by the end user.

However the rate at which carbon dioxide is produced depends on the rate of the fermentation process and can be unpredictable, for example being impacted by temperature fluctuations, etc. Thus there may be no indication of significant pressure build-up for a number of days, followed by excessive pressure increase in a relatively short space of time. Particularly for a novice, it has been found that enthusiasm for checking and regulating the bag pressure dwindles over initial periods of inactivity such that there is a likelihood of forgetting to check the pressure at the critical stage.

Furthermore, conventional brew bags are often formed with a strong woven textile outer layer, in order to provide the required strength for withstanding elevated internal pressures. Such bags are typically unsightly and often need to be hung due to their construction. This results in bags being located somewhere outside of the normal living area in the home. As well as negative impact on the perception of home brewing, this can also lead to brew bags being forgotten, thereby increasing the likelihood of excessive pressure build up as discussed above.

Alternatively, conventional brew bags are often hung from hooks on the rear of a door. If the door is in regular use, e.g. such as a kitchen door, the bag and liquid inside is agitated. This prevents the beer from 'dropping bright' after fermentation and can produce an unacceptable product.

It is an aim of the present invention to provide a fermentation enclosure which allows simple and convenient production of beverages in a domestic, or similar, environment.

According to a first aspect of the present invention, there is provided a fermentation enclosure in the form of a flexible pouch having first and second openings therein, the first opening having a removable cap assembly and the second opening having a liquid dispensing arrangement for selective dispensing of liquid from the interior of the pouch, wherein the pouch comprises first and second opposing flexible sheets sealed together at opposing edges to define an internal cavity there-between and an intermediate sheet interposed between the first and second sheets to provide a base of the pouch in use such that the pouch is arranged to provide a self-supporting enclosure when at least partially filled with liquid, and the removable cap assembly is arranged to vent pressure from the interior of the pouch over a predetermined pressure range, wherein at least one sealed edge is arranged to yield at a predetermined internal pressure within the pouch of between 4psi (0.28 bar) and 12psi (0.83 bar) relative to the ambient external pressure.

The first opening may have an upstanding wall, e.g. a circumferential wall, or spout formation for reception of the cap.

The first opening and cap arrangement provides a venting or gas pressure release arrangement. The first opening and cap arrangement may be liquid impervious but may be gas pervious or breathable. The cap may be formed so as to define a gas path between the interior and exterior of the pouch once attached to the opening. Once attached the geometry of the cap and the first opening may define a gas path there-between. Additionally or alternatively, the cap may have an opening and/or valve in a wall thereof.

The cap and/or opening may comprise a textile or otherwise porous material, such as a cellular material, which may cover the entirety of the first opening. The material may be breathable but liquid-impervious. The material may comprise micro-pores. The pore size of the material may be small enough to provide a barrier to micro-organisms and liquid. The material may be provided in the form of a membrane or liner for the cap. The membrane may be provided within the interior of the cap and may seal against the first opening, for example against the end of a spout formation.

The first opening and cap may be threaded. The helix of the thread formations on the cap and/or opening may be arranged so as to define a gas path there-between once the cap is attached. The thread formations may be spaced and/or or oriented so as to define a helical gas path between the interior and exterior of the pouch. This may be achieved, for example by providing a continuous helical thread having an increased helix angle relative to the axis of the opening/spout.

The liquid dispensing arrangement may comprise a valve member which is moveable between closed and open conditions to allow fluid to be dispensed from the pouch, for example under the action of gravity and/or positive pressure within the pouch. The valve may be biased to the closed condition. The liquid dispensing arrangement may comprise a tap arrangement, for example having a spout portion for selectively dispensing liquid from the pouch interior.

The pouch is preferably a flexible or pliable pouch. The pouch may be formed of a thin-walled membrane or sheet construction, such as a polymer sheet construction.. Opposing sheets may be sealed using heat, pressure and/or adhesive and may be define a seam.

At least one sealed edge of the pouch is tailored to yield at a predetermined internal pressure (i.e. a pressure difference relative to the ambient external pressure) between 4 and 12 psi (i.e. 0.28 to 0.83 bar) and typically between 5 and 12 psi (0.34 and 0.83 bar).

One or more intermediate walls or sheets are provided, to provide a base or upper wall of the pouch in use. The base may be interposed between the first and second sheets. The base may be deformable such that the pouch can be laid flat when empty. When the pouch is filled with liquid, the base may open out in order to provide a generally flat base which is angled relative to the first and second walls. In the filled condition, the base may be oblique or substantially perpendicular to the first and second walls such that the first and second walls are upstanding. The base may be sealed about its periphery to the first and second walls.

According to a preferred embodiment, the pouch is free standing in use. The pouch may be formed such that the opposing first and second walls lie against each other. In this condition the internal cavity may be of minimal volume (i.e. substantially empty or evacuated). The, or each, intermediate wall may also lie against the first and/or second wall. Any or any combination of the first, second and/or intermediate wall(s) may be substantially rectangular in plan.

The minimal volume arrangement of the pouch may represent a storage condition. The pouch may be rolled up, e.g. for insertion into a rigid tube.

The pouch may be substantially filled in use. The opposing first and second walls may be spaced apart in a usage condition such that the internal cavity is of increased volume relative to the storage condition. The intermediate wall may extend between the spaced opposing first and second walls so as to provide a substantially flat, weight-bearing base of the pouch in use.

The pouch may be substantially filled with fluid, typically predominantly with a liquid, although a proportion of gas may be present.

The pouch may be sealed along each major edge thereof, for example along the edges of the opposing first and second walls. The sealed edges may represent the sides and/or upper/lower extremities of the pouch. A seal between the first and/or second walls and the intermediate wall(s) may be obliquely oriented relative to the pouch edges or side walls. A sealed corner region may be defined, which may have adjacent edges of approximately one quarter of the width/length of the pouch. This may allow a desired profile of the pouch in the in-use or filled condition to be achieved. Thus one or more corner regions of the pouch may not form part of the internal cavity of the pouch.

An opening may be provided in the first and/or second wall in an upper corner thereof. Such an opening may provide a handle formation, which is typically external of the pouch interior.

The pouch may be generally hexagonal in section when filled. The pouch may take the approximate shape of a hexagonal prism when filled. The pouch may be substantially planar and rectangular in plan when empty. The pouch may be laid flat, rolled, folded or otherwise deformed in order to provide a storage condition.

The pouch may have an internal volume or capacity of 5 litres or more, and typically 10 litres or more. The pouch may have an internal volume or capacity of greater than 12 litres, such as approximately between 14 and 20 litres. The pouch may be designed to hold between 14 and 15 litres of liquid. The capacity of the pouch may differ from its maximum internal volume. That is to say the pouch may be designed to hold the above-discussed volume of liquid but may have a greater internal volume so as to allow at least a portion of gas to be present within the pouch when filled.

Any or any combination of the pouch walls may comprise sheet polymer material. Any or any combination of the pouch walls may comprise a plurality of layers comprising different materials. At least one layer may comprise a metal or metallised material layer, such as a metallised film or metal foil. Said layer may be an intermediate layer, for example sandwiched between opposing layers on either side thereof. An aluminium layer may be provided.

The rigid container may be cylindrical. The pouch may be rolled within the container.

In other aspects or embodiments, the active yeast ingredient may be provided within the pouch, e.g. in a storage condition.

In any aspect or embodiment, the pouch may be devoid of rigid support formations (e.g. containers or the like) for supporting the weight of the filled pouch in an in-use condition.

Practicable embodiments of the invention will be described in further detail below by way of example only with reference to the accompanying drawings, of which:
Figure 1 shows a plan view of a first panel of a flexible pouch according to an example of the invention;
Figure 2, shows a three-dimensional view of an empty pouch according to an example of the invention;
Figure 3 shows a three-dimensional view of the pouch of Figure 2 in use; and
Figure 4 shows a sectional view through a cap arrangement according to one example of the invention.

The invention concerns a deformable fermentation enclosure, referred to herein as a pouch, or a fermentation kit. However it will be appreciated that such enclosures may otherwise be referred to as a bag, sack or similar.

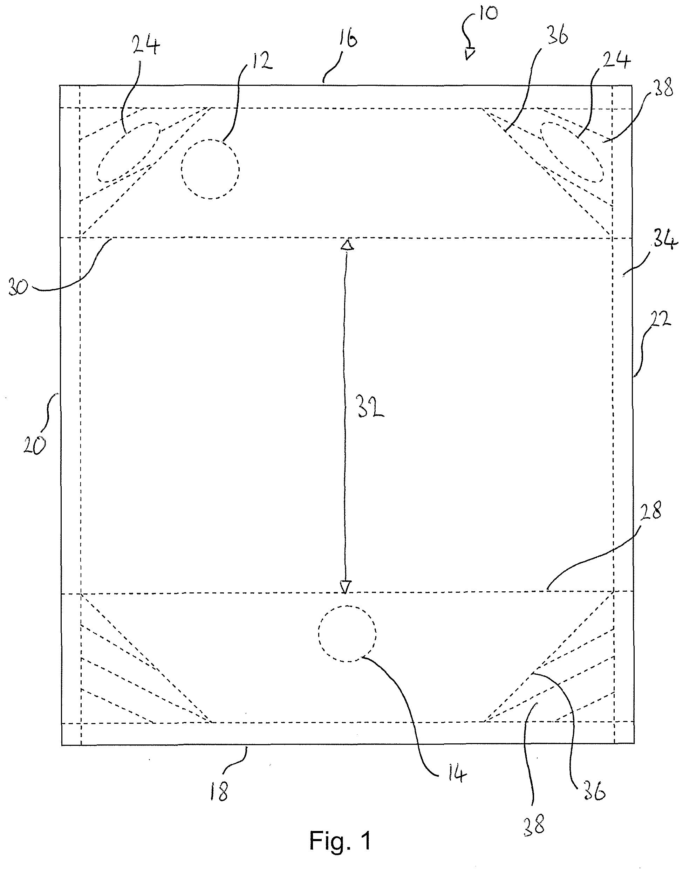

Turning firstly to Figure 1, there is shown a panel 10 of sheet material used to create one wall of a flexible pouch according to one example of the invention.

The panel 10 is generally rectangular in plan and may comprise a generally uniform sheet material. A number of features are shown in phantom in Fig. 1 in order to indicate the location of features during the manufacture of the pouch.

The panel 10 is provided with openings 12 and 14 which correspond to the respective locations of an inlet port and a dispensing - or outlet - port in use. The openings 12, 14 are spaced such that the inlet opening 12 is closer to an upper edge 16 of the panel and the outlet opening 14 is closer to a lower edge 18. The openings 12, 14 may be described as being generally adjacent respective edges 16, 18 and may be spaced therefrom by a relatively short distance relative to the spacing between the openings. The outlet opening 14 is generally centrally located between opposing sides 20, 22 of the panel 10. The inlet opening may be generally centrally located between the sides or may be offset therefrom as shown in Fig. 1.

One or more further openings 24 may be provided in the vicinity of one or more upper corners of the panel 10. Such an opening 24 may serve to provide a carrying handle in the upper corner of the pouch once formed. Such an opening 24 may be generally curved in plan or elliptical in shape.

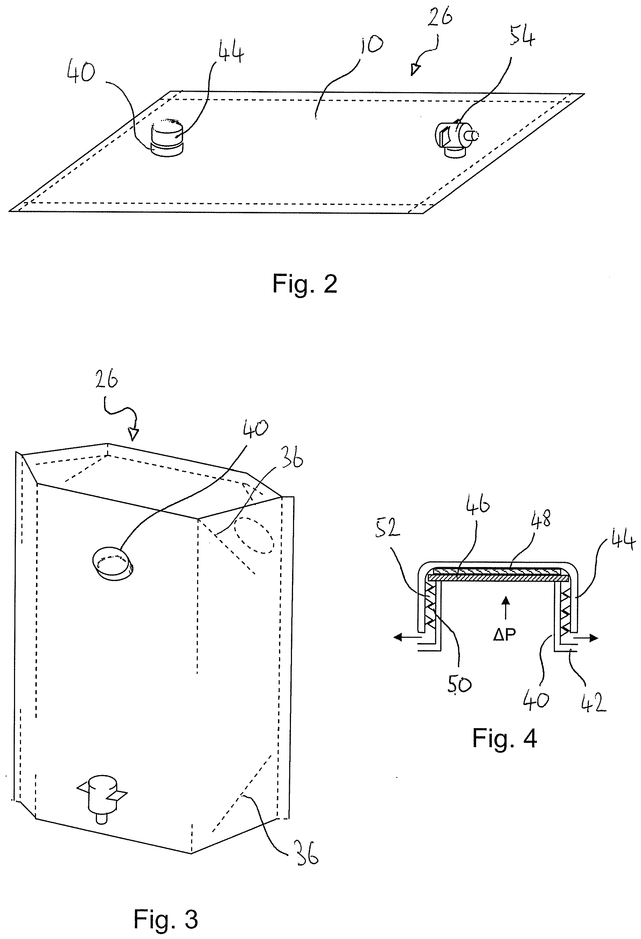

During manufacture of a pouch 26 as shown in Figs. 2 and 3, a first panel 10 is placed flat against a second panel of the same dimensions. The second panel is generally identical to the first panel 10 save that the second panel may or may not have openings 12 or 14.

An intermediate panel (not shown) is folded, e.g. in half, and inserted between the first and second panels. The intermediate panel is typically rectangular in shape and has a width dimension which is approximately equal to the width of the first panel 10. The intermediate panel is located in the region adjacent the lower edge 18. Line 28 represents the height of the intermediate panel relative to the first and second panels. In particular the line 28 represents the location of the fold in the intermediate panel when located between the panels.

A further intermediate panel may be positioned adjacent the upper edge 16, e.g. with its fold line at 30, such that the intermediate panels are spaced by a central region of the panel/pouch 32. Whilst this upper panel is preferable, it is not essential and the pouch may be formed with an intermediate panel at the lower end only.

The first and second panels are sealed together about their edges so as to define a peripheral seal region 34 about the pouch. The first and second panels are sealed along sides 20 22, typically along the entirety of said sides. If the upper intermediate panel is absent, the first and second panels are sealed along their upper edges 16 also.

Where an intermediate panel is provided, the intermediate panel is sealed to each of the first and second panels (i.e. on opposing faces thereof) along the peripheral seal region 34. However in the vicinity of the corners of the pouch, the intermediate wall is also sealed up to an oblique sealing line 36 so as to define a generally triangular or otherwise obliquely angled sealing region 38 relative to the sides and upper/lower edges.

The oblique sealing region helps to provide added strength in the pouch when filled as well as defining a desired shape of the filled pouch as will be described below.

The internal volume of the pouch is defined as the space between the peripheral seal region 34 and the oblique seal lines 36. When viewed in plan, the internal space of the pouch is generally octagonal when the pouch is flat, for example having two trapezoidal ends spaced by a generally rectangular mid portion.

The seals may define a gusset region which is external to the internal void of the pouch in use. In examples of the invention, any of the seals may be reinforced, particularly along, or up to, line 36 in order to prevent channelling and leakage from the interior of the pouch in use.

The openings 24 are provided in the sealed region 28 and may pass through all panels/layers of the pouch.

The seals may be formed by providing an adhesive along the respective edges or seal portions 34, 36. Additionally or alternatively the sheet materials may be sealed using heat and pressure applied along said seal portions.

In any example of the invention, the edge seals may be between 10 and 20 mm in width, for example approximately 15 mm in this embodiment. The edge seals may be formed by a face-to -face engagement between the peripheral edges of opposing panels, e.g. thereby forming a flange or seam at the peripheral edge depending outwardly of the pouch interior.

This type of face seal has been found to be particularly beneficial in preventing overpressure in the pouch in use, such as for example caused by a user damaging the pressure relief cap (details of which are to be described below). Thus the sealed edges of the pouch can provide a sacrificial seam as a safety feature to prevent overpressure. The yield pressure of the seam is preferably in the region of 6 psi (0.41 bar) although this may be varied as defined in claim 1, depending on the desired level of carbonation of the resulting beverage by varying the width and/or other parameters of the gusset. One edge may be sealed in a weakened manner, e.g. in an upper end of the pouch, to promote yielding of the pouch in a manner which is less likely to spill the entire contents.

The pouch, when flat, may be between 400 and 500 mm in length/height, for example approximately 470-490 mm in this embodiment. The pouch, when flat, may be between 350 and 450 mm in width, such as approximately 410-430 mm in this example. This produces a bag of the desired internal volume to accommodate fourteen to fifteen litres (i.e. approximately 25 pints) of liquid whilst leaving an air gap at the upper end of the pouch. However varying sizes of pouches may be created according to the invention, such as for example as small as 4 or 5 litres in size. Pouches of such size may be suited to wine making or other beverage storage.

The openings 12 and 14 in the first panel may be spaced from the respective edges by between 20 and 80 mm.

The openings may be circular and may be between 30 and 50 mm in diameter, for example approximately 42 mm in this embodiment.

The corner portions 38 may have adjacent edges of between 100 and 120 mm in length, e.g. approximately 110 mm. Accordingly the mid portion 32 may be between 200 and 300 mm in height, e.g. 230 or 240 mm in this embodiment. Each of the panels described above preferably comprises a plurality of layers, i.e. as a laminate sheet construction. The flexibility, tensile strength and barrier properties (i.e. to moisture, air and light) are all important considerations of the pouch and the sheet construction is tailored to suit the bespoke use as a fermentation enclosure. Accordingly it is desirous to provide a metal layer in the laminate makeup between adjacent polymer layers. One example of a suitable laminate for the front and back panels, which has been found to provide an effective barrier, comprises the following layers:
PET (12 µm), Aluminium (7 µm), Nylon (15 µm), LDPE (150 µm)

However it will be appreciated that alternative laminate constructions may be used, for example:
PET (12 µm), Metallised PET (12 µm), Nylon (15 µm), LDPE (150 µm)

The MPET may be a Vacuum Metallised PET. Such optional laminate constructions represent the result of initial product development work by the applicant and it is intended that further development work will be undertaken, which may result in a further optimised pouch construction.

Ideally the wall thickness of the front and back panels is in the region of 100-300 µm (typically 150-200 µm) although various materials and thickness may be attempted in order to provide the desired characteristics. For example, conventional polymers, e.g. thermoplastics, other than those described above may be used. In the embodiments above, the thicker LDPE layer provides a desirable pliability and toughness to the panel.

In any example of the invention, it has been found that the metallic layer in the laminate construction is particularly important in preventing creep (i.e. plastic deformation) of the sheet material when the pouch is pressurised in use during the fermentation process. A metallic layer of anywhere between, for example, 5 and 20 µm could potentially be used. The use of such a layer allows a product of improved visual appeal to be used compared to woven sacks used in the prior art.

The intermediate panel at the lower end of the pouch (i.e. the base panel) may be strengthened, for example by having a further LDPE layer (e.g. of 150 µm also). Thus the base panel may be thicker than the front and back panels and may be lined on both interior and exterior faces with a resilient support layer. The base panel thickness may be 250-400 µm.

As shown in Figure 2, the openings 12 and 14 are provided with corresponding port formations. The first panel 10 defines a front wall of the pouch once formed and the second panel defines a rear wall.

The opening 12 is provided with an upstanding peripheral wall formation 40, such as a neck, formed of a generally rigid plastic material. The port formation typically has a peripheral flange 42 (e.g. as shown in Fig. 4) for attachment to the panel 10 to thereby seal with the panel and strengthen the panel in the vicinity of the spout.

A cap member 44 is provided over the port formation to provide a liquid seal in use. The cap member 44 is removably attachable to the port formation. The cap member may be provided on the port formation and may be removed to allow the pouch to be filled in use.

The port formation 40 is generally circular in plan/section so as to provide an open neck or spout formation. In this embodiment the port formation 40 is threaded for attachment of a cap 44 thereto.

Details of the port and cap arrangement are shown in Fig. 4. It can be seen that the cap is provided with lining 46, which comprises a gas-permeable membrane arranged to be fitted over the port opening. The membrane may be a textile such as a woven textile which provides a moisture barrier but which is gas permeable. Other woven or non-woven textiles may be used, such as sheet polymer materials having pore sizes of a range sufficient to allow gas molecules to pass therethrough but to inhibit the passage of liquids. Expanded and/or low density polymer materials amongst other cellular/foam materials may be well suited to this purpose.

The lining 46 is mounted to the solid cap 44 by a breathable spacer layer or formation 48. This allows gas to permeate through the lining 46 and breathable layer 48 into the cap enclosure.

The cap is provided with a gas path for allowing gas to escape the pouch in use. In this example the gas path is provided by way of the interaction between the threads of the neck and cap. The neck 40 has a helical thread 50 of spacing greater than a conventional thread. The thread of the cap 44 is correspondingly spaced to as to engage with the thread of the neck. Thus the cap can be securely fastened on the neck. However when the threads engage, the angle of the helix is sufficient to define a gap 52 between adjacent passes of the thread. This gap defines a passageway, i.e. a helical passageway, between the interior and exterior of the cap. However in other embodiments a suitable passageway may otherwise be formed, such as for example by providing discontinuities in each turn of the thread or else by providing an opening in the end wall of the cap.

The threaded gas path is in many ways preferred since it allows a gas path which is tamper proof (i.e. which is unlikely to become blocked). The cap can be tightened such that the end-user perceives that the cap is rigidly secured, whilst still providing the desired gas path. Furthermore the cap can be applied and removed as desired. However in other embodiments, other cap or one-way valve formations may be provided, such as for example in the form of push-fit caps which can lift off the neck upon the internal pressure exceeding a predetermined threshold level.

In some embodiments, alternative twist-lock caps or non-return, push-fit or snap-fit caps could be provided to prevent removal of the cap once it has been applied.

In different embodiments of the invention, the cap may be tailored to vent according to the internal pressure within the pouch in use. The cap may initiate venting at a lower threshold, such as between 1.5 and 2 psi (0.1 and 0.14 bar), e.g. around 1.8 psi (0.12 bar). The rate at which pressure is released by the cap may vary up to a maximum flow rate at around 3 to 4 psi (0.20 to 0.28 bar) pressure differential between the internal pressure and ambient. This tailoring of the vent rates has been found to be particularly beneficial to the production of beers with good satiety and without requiring intervention in the brewing process by the end user. The maximum valve vent pressure is tailored to be lower than the yield pressure of the pouch seals as described above.

Turning back to Fig. 2, the opening 14 is provided with a liquid dispensing valve or tap arrangement 54. The tap arrangement has an internal conduit leading from the internal cavity of the pouch to the pouch exterior. A valve member is located in the conduit and can be selectively actuated from a closed condition to an open condition in order to allow dispensing of fluid from the pouch interior. The valve member in this embodiment is biased to the closed condition by a spring or similar such that the valve is only opened upon depression of a button, or similar actuator, by a user, after which the valve automatically returns to the closed condition.

The pouch described above is provided for distribution within a generally rigid container such as a box, carton or similar. The pouch may be rolled up from the condition shown in Fig. 2 such that it can be provided in a cylindrical container. A sachet comprising yeast is provided in the container along with instructions for the end user. The sachet may comprise one or more further dried ingredients to facilitate the desired fermentation process. For example the sachet may be tailored for brewing beer, wine, cider or similar. In the context of the present invention, the applicant has coined the phrase MOONDUST (TM) to refer to the ingredients to be inserted into the pouch for the production of the relevant beverage.

Upon unpacking the container, the end user may simply remove the cap 44 to open the inlet opening 12 and then pour the yeast mixture from the sachet into the pouch via the neck 40. The user then pours a predetermined quantity of liquid into the pouch. Typically the liquid comprises a measured volume of pre-boiled water (e.g. direct from a kettle). However other liquid mixtures could be provided in sealed containers to the end user if necessary.

When being filled, the front and rear walls of the pouch move apart so as to open out the intermediate panel and thereby form the three-dimensional pouch profile as shown in Fig. 3. The corner gussets and sealed sections define a generally hexagonal sectional profile of the pouch when filled. The provision of generally parallel front and rear panel face portions is particularly advantageous for providing prominent tap and cap features whilst retaining g the required strength/rigidity of the pouch. The intermediate panel will thus lie substantially flat if placed on a flat surface to provide a base for supporting the pouch in a stable upright configuration. However other generally polygonal sectional profiles may be achieved as desired using different panel and seal arrangements.

Once the pouch is filled with a desired volume of liquid, the cap is reapplied by the user and the pouch can be left for a period of time to allow the fermentation process to be carried out. During the fermentation process, any gas given off, which serves to increase the internal pressure within the pouch, can be vented via the port and cap formation discussed above. The fermentation process will typically take a number of days, such as approximately one week, depending on ambient conditions, after which time the user can dispense the beverage via the tap 54 directly into a drinking vessel for consumption. In the example of brewing beer, the beer can be kept within the pouch for up to a fortnight or so without spoiling.

The present invention avoids the need to sterilise any fermentation equipment or containers, such as bottles or the like. Furthermore the sealed nature of the pouch means that the pouch can be left in a convenient location, such as on a kitchen or pantry work surface or the like without risk of spillage.

Furthermore cap provides a slight resistance to gas flow, in this example due to the resistance of the membrane 46 and tortuous gas path through the cap. The resistance to gas flow provided by the cap is beneficial since it can allow a slight positive pressure to be maintained within the pouch during fermentation. This helps the pouch to retain its desired shape. However this resistance to gas flow may be minimised or else tailored to suit a desired internal pressure of the pouch.

In other embodiments, the cap formation could be provided in the upper panel of the pouch. This would allow easy filling from above.

Other shapes of the front and back panels are envisaged depending on the desired shape of the product when filled. For example a trapezoidal front and rear panel may provide a larger bas area and thus provide a pouch which is less prone to toppling over. However such benefits will be achieved at the detriment to the ability to drain the pouch via the tap. Accordingly, various different pouch geometries may be attained depending of desirable contour of the pouch. Such geometries will typically involve substantially quadrilateral opposing panels for ease of manufacture although other panel geometries are not excluded.

In other examples, different tap configurations may be used. For example, a twist tap or lever tap arrangement of known type may be applied. However a pushbutton tap is in many ways preferred since it will default back to a closed/sealed condition when not actuated by the user, thereby reducing the likelihood of unintentional wastage of liquid via the tap.
Whilst the above pouch construction is described particularly with respect to a beer brewing apparatus, it will be appreciated that the pouch may be tailored to suit other fermentation processes, such as for making wine, perry, cider, rice wine or other alcoholic beverages.

The present invention provides simple and effective brewing/fermentation apparatus, which can allow a significant volume of an alcoholic beverage to be produced with minimal material wastage. Furthermore the invention reduces the cost and energy consumed through bulk transportation of beer and disposal of receptacles such as bottles and cans.

## Claims

1. A fermentation enclosure in the form of a flexible pouch (26) having first (12) and second (14) openings therein, the first opening (12) having a removable cap assembly (40, 44) and the second opening (14) having a liquid dispensing arrangement (54) for selective dispensing of liquid from the interior of the pouch (26), wherein the pouch comprises first and second opposing flexible sheets (10) sealed together at opposing edges to define an internal cavity there-between and an intermediate sheet interposed between the first and second sheets (10) to provide a base of the pouch in use such that the pouch is arranged to provide a self-supporting enclosure when at least partially filled with liquid, and the removable cap assembly (40, 44) is arranged to vent pressure from the interior of the pouch (26) over a predetermined pressure range, wherein at least one sealed edge is arranged to yield at a predetermined internal pressure within the pouch (26) of between 0.28 and 0.83 bar relative to the ambient external pressure.

2. A fermentation enclosure according to Claim 1, wherein the cap assembly is arranged to vent pressure from the interior of the pouch over a predetermined pressure range of between 0.1 and 0.3 bar above the ambient external pressure.

3. A fermentation enclosure according to Claim 1 or Claim 2, wherein the first opening (12) has an upstanding wall (40) for reception of a cap (44) of the removable cap assembly (40, 44), and the cap (44) and upstanding wall (40) have corresponding engagement formations (50) for attachment of the removable cap (44) to the upstanding wall formation (40).

4. A fermentation enclosure according to Claim 3, wherein the removable cap assembly (40, 44) is shaped to define a gas path between the interior and exterior of the pouch (26) when the cap (44) of the removable cap assembly (40, 44) is attached to the first opening (12).

5. A fermentation enclosure according to Claim 4, wherein the upstanding wall (40) and the cap (44) are threaded, the helix of the thread formations on the cap (44) and upstanding wall (40) being arranged so as to define the gas path through the helical thread formations.

6. A fermentation enclosure according to any preceding claim, wherein the intermediate sheet is sealed to the first and/or second sheet at an oblique angle in the vicinity of one or more corner of the pouch to thereby define a gusset portion which is external of the pouch interior and wherein the base is reinforced relative to the first and second sheets.

7. A fermentation enclosure according to any preceding claim, wherein the sealed edges are formed by face-to-face engagement between opposing peripheral edges of the first and second opposing sheets, thereby forming a seam at the peripheral edge of the pouch depending outwardly of the pouch interior.

8. A fermentation enclosure according to Claim 7, wherein the sealed edges are between 10 and 20 mm in width.

9. A fermentation enclosure according to Claim 7 or 8, wherein one sealed edge is sealed in a weakened manner.

10. A fermentation enclosure according to any of Claims 3 to 5, wherein the cap (44) of the removable cap assembly (40, 44) is tailored to vent according to the internal pressure within the pouch in use and a maximum vent pressure is configured to be below the predetermined internal pressure at which the sealed edges are arranged to yield.

11. A fermentation enclosure according to any preceding claim, wherein the first and second opposing flexible sheets (10) each comprise a laminate construction having at least one metallic layer therein.

12. A fermentation enclosure according to any preceding claim, wherein the removable cap assembly (40, 44) defines a liquid barrier which is gas permeable.

13. A fermentation enclosure according to claim 6, wherein the pouch is generally hexagonal in section when filled.

14. A fermentation enclosure according to any preceding claim, wherein the pouch (26) has an internal capacity of ten litres or more.

## Patentansprüche

1. Fermentationseinschluss in der Form eines flexiblen Beutels (26) mit einer ersten (12) und einer zweiten (14) Öffnung darin, wobei die erste Öffnung (12) eine entfernbare Kappenanordnung (40, 44) aufweist und die zweite Öffnung (14) eine flüssigkeitsausgebende Anordnung (54) für das selektive Ausgeben von Flüssigkeit aus dem Inneren des Beutels (26) aufweist, wobei der Beutel eine erste und eine zweite gegenüberliegende flexible Platte (10), die an gegenüberliegenden Rändern zusammen abgedichtet sind, um einen internen Hohlraum dazwischen zu definieren, und eine Zwischenplatte umfasst, die zwischen der ersten und der zweiten Platte (10) angeordnet ist, um eine Basis des Beutels in Verwendung derart bereitzustellen, dass der Beutel angeordnet ist, um einen selbststützenden Einschluss bereitzustellen, wenn er wenigstens teilweise mit Flüssigkeit gefüllt ist, und wobei die entfernbare Kappenanordnung (40, 44) angeordnet ist, um Druck von dem Inneren des Beutels (26) über einen vorbestimmten Druckbereich zu entlüften, wobei wenigstens ein abgedichteter Rand angeordnet ist, um bei einem vorbestimmten Innendruck zwischen 0,28 und 0,83 bar innerhalb des Beutels (26) relativ zu dem äußeren Umgebungsdruck nachzugeben.

2. Fermentationseinschluss nach Anspruch 1, wobei die Kappenanordnung angeordnet ist, um Druck aus dem Inneren des Beutels über einen vorbestimmten Druckbereich zwischen 0,1 und 0,3 bar über dem äußeren Umgebungsdruck zu entlüften.

3. Fermentationseinschluss nach Anspruch 1 oder 2, wobei die erste Öffnung (12) eine aufrechte Wand (40) für die Aufnahme einer Kappe (44) der entfernbaren Kappenanordnung (40, 44) aufweist und die Kappe (44) und die aufrechte Wand (40) entsprechende Eingriffsausbildungen (50) für eine Befestigung der entfernbaren Kappe (44) an der aufrechten Wandausbildung (40) aufweisen.

4. Fermentationseinschluss nach Anspruch 3, wobei die entfernbare Kappenanordnung (40, 44) geformt ist, um einen Gaspfad zwischen dem Inneren und dem Äußeren des Beutels (26) zu definieren, wenn die Kappe (44) der entfernbaren Kappenanordnung (40, 44) an der ersten Öffnung (12) befestigt ist.

5. Fermentationseinschluss nach Anspruch 4, wobei die aufrechte Wand (40) und die Kappe (44) mit Gewinden versehen sind, wobei die Spirale der Gewindeausbildungen auf der Kappe (44) und der aufrechten Wand (40) angeordnet ist, um den Gaspfad durch die spiralförmigen Gewindeformationen zu definieren.

6. Fermentationseinschluss nach einem der vorhergehenden Ansprüche, wobei die Zwischenplatte an der ersten und/oder der zweiten Platte in einem schiefen Winkel in der Nähe einer oder mehreren Ecken des Beutels abgedichtet ist, um dadurch einen Eckversteifungsabschnitt zu definieren, der außerhalb des Beutelinneren liegt und wobei die Basis relativ zu der ersten und der zweiten Platte verstärkt ist.

7. Fermentationseinschluss nach einem der vorhergehenden Ansprüche, wobei die abgedichteten Ränder durch einen Verbindungseingriff zwischen gegenüberliegen Umfangsrändern der ersten und der zweiten gegenüberliegenden Platte ausgebildet werden, wobei dadurch eine Naht an dem Umfangsrand des Beutels ausgebildet wird, der nach außen von dem Beutelinneren abhängig ist.

8. Fermentationseinschluss nach Anspruch 7, wobei die abgedichteten Ränder zwischen 10 und 20 mm breit sind.

9. Fermentationseinschluss nach Anspruch 7 oder 8, wobei ein abgedichteter Rand auf eine geschwächte Weise abgedichtet ist.

10. Fermentationseinschluss nach einem der Ansprüche 3 bis 5, wobei die Kappe (44) der entfernbaren Kappenanordnung (40, 44) zugeschnitten ist, um gemäß dem Innendruck innerhalb des Beutels in Verwendung zu entlüften und ein maximaler Entlastungsdruck konfiguriert ist, um unter dem vorbestimmten Innendruck zu liegen, bei dem die abgedichteten Ränder angeordnet sind, nachzugeben.

11. Fermentationseinschluss nach einem der vorhergehenden Ansprüche, wobei die erste und die zweite gegenüberliegende flexible Platte (10) jeweils eine Laminatkonstruktion mit wenigstens einer metallischen Schicht darin umfassen.

12. Fermentationseinschluss nach einem der vorhergehenden Ansprüche, wobei die entfernbare Kappenanordnung (40, 44) eine Flüssigkeitsbarriere definiert, die für Gas durchlässig ist.

13. Fermentationseinschluss nach Anspruch 6, wobei der Beutel im Allgemeinen in Bereichen hexagonal ist, wenn er gefüllt ist.

14. Fermentationseinschluss nach einem der vorhergehenden Ansprüche, wobei der Beutel (26) eine interne Kapazität von zehn Litern oder mehr aufweist.

## Revendications

1. Enceinte de fermentation sous forme de sachet souple (26) au sein de laquelle se trouvent des première (12) et deuxième (14) ouvertures, la première ouverture (12) possédant un ensemble capuchon amovible (40, 44), et la deuxième ouverture (14) possédant un agencement de distribution de liquide (54) pour une distribution sélective de liquide de l'intérieur du sachet (26), le sachet comprenant des première et deuxième feuilles souples opposées (10), scellées ensemble à des bords opposés, en définissant une cavité interne entre elles, et une feuille intermédiaire intercalée entre les première et deuxième feuilles (10) pour donner, en cours d'usage, un fond au sachet, de sorte que le sachet soit agencé pour constituer une enceinte autoportante lorsqu'il est rempli, au moins partiellement, de liquide, et l'ensemble capuchon amovible (40, 44) étant agencé pour évacuer la pression de l'intérieur du sachet (26) dans une plage de pressions prédéterminée, au moins un bord scellé étant agencé pour céder à une pression interne prédéterminée, au sein du sachet (26), comprise entre 0,28 et 0,83 bar relativement à la pression externe ambiante.

2. Enceinte de fermentation selon la revendication 1, l'ensemble capuchon étant agencé pour évacuer la pression de l'intérieur du sachet dans une plage de pressions prédéterminée comprise entre 0,1 et 0,3 bar au-dessus de la pression externe ambiante.

3. Enceinte de fermentation selon la revendication 1 ou la revendication 2, la première ouverture (12) possédant une paroi verticale (40) pour la réception d'un capuchon (44) de l'ensemble capuchon amovible (40, 44), et le capuchon (44) et la paroi verticale (40) étant dotés de formations d'engagement correspondantes (50) pour la fixation du capuchon amovible (44) sur la formation de la paroi verticale (40).

4. Enceinte de fermentation selon la revendication 3, l'ensemble capuchon amovible (40, 44) étant façonné de façon à définir un chemin de gaz entre l'intérieur et l'extérieur du sachet (26) lorsque le capuchon (44) de l'ensemble capuchon amovible (40, 44) est fixé sur la première ouverture (12).

5. Enceinte de fermentation selon la revendication 4, la paroi verticale (40) et le capuchon (44) étant filetés, l'hélice des formations de filet sur le capuchon (44) et la paroi verticale (40) étant agencée de façon à définir le chemin de gaz à travers les formations de filets hélicoïdaux.

6. Enceinte de fermentation selon une quelconque des revendications précédentes, la feuille intermédiaire étant scellée sur la première et/ou la deuxième feuilles à un angle oblique dans le voisinage d'un ou plusieurs coins du sachet en définissant ainsi une partie à soufflet extérieure à l'intérieur du sachet, et la base étant renforcée relativement aux première et deuxième feuilles.

7. Enceinte de fermentation selon une quelconque des revendications précédentes, les bords scellés étant formés dans un engagement en face à face entre des bords périphériques opposés des première et deuxième feuilles opposées, en formant ainsi un joint sur le bord périphérique du sachet dépendant, vers l'extérieur, de l'intérieur du sachet.

8. Enceinte de fermentation selon la revendication 7, les bords scellés mesurant de 10 à 20 mm de large.

9. Enceinte de fermentation selon la revendication 7 ou 8, un bord scellé étant scellé de façon fragilisée.

10. Enceinte de fermentation selon une quelconque des revendications 3 à 5, le capuchon (44) de l'ensemble capuchon amovible (40, 44) étant adapté pour effectuer une évacuation en fonction de la pression interne dans le sachet, en cours d'usage, et une pression d'évacuation maximale étant configurée pour être inférieure à la pression interne prédéterminée à laquelle les bords scellés sont agencés pour céder.

11. Enceinte de fermentation selon une quelconque des revendications précédentes, les première et deuxième feuilles souples opposées (10) possédant chacune une structure stratifiée, dans laquelle se trouve au moins une couche métallique.

12. Enceinte de fermentation selon une quelconque des revendications précédentes, l'ensemble capuchon amovible (40, 44) définissant une barrière liquide perméable aux gaz.

13. Enceinte de fermentation selon la revendication 6, le sachet ayant une section globalement hexagonale lorsqu'il est rempli.

14. Enceinte de fermentation selon une quelconque des revendications précédentes, le sachet (26) ayant une capacité interne de dix litres ou davantage.
